Europäisches Patentamt

**European Patent Office**

**Office européen des brevets**

(11) Veröffentlichungsnummer: **0 209 492**
A2

# EUROPÄISCHE PATENTANMELDUNG

(21) Anmeldenummer: 86810303.7

(22) Anmeldetag: 09.07.86

(51) Int. Cl.⁴: **C 07 C 113/00**, G 01 N 27/46
// C09B41/00, C09B29/00

(30) Priorität: 15.07.85 CH 3052/85

(43) Veröffentlichungstag der Anmeldung: 21.01.87
**Patentblatt 87/4**

(84) Benannte Vertragsstaaten: **BE CH DE FR GB IT LI NL**

(71) Anmelder: **CIBA-GEIGY AG, Klybeckstrasse 141,
CH-4002 Basel (CH)**

(72) Erfinder: **Rakoczi, Ferenc, Dr., Grüauring 20/125,
CH-8064 Zürich (CH)**
Erfinder: **Förtsch, Bruno, Dr., Eggweg,
CH-4433 Ramlinsburg (CH)**

(54) **Verfahren zur Eliminierung des Nitritüberschusses in Diazotierungslösungen.**

(57) Beschrieben wird ein automatisch gesteuertes kontinuierliches Verfahren zur Eliminierung des Nitritüberschusses in Diazotierungslösungen aromatischer Amine, das dadurch gekennzeichnet ist, dass die Zugabe des zur Entfernung der Nitritionen verwendeten Mittels durch eine elektrochemische Regelgrösse gesteuert wird.

Das Verfahren ermöglicht eine problemlose Überwachung der Nitritionenkonzentration in Diazotierungslösungen. Von Vorteil ist, dass die Erfassung der elektrochemischen Regelgrösse praktisch verzögerungsfrei erfolgt und über die Potentialschwankungen auf einfache Weise die Zufuhr an nitritzerstörendem Mittel gesteuert werden kann.

1-15425/=

## Verfahren zur Eliminierung des Nitritüberschusses in Diazotierungslösungen.

Die Erfindung betrifft ein, durch eine elektrochemische Regelgrösse gesteuertes kontinuierliches Verfahren zur Eliminierung des Nitritüberschusses in Diazotierungslösungen.

Bei der Herstellung von Azofarbstoffen geht man allgemein so vor, dass man das als Diazokomponente verwendete Amin zunächst diazotiert und dann mit der entsprechenden Kupplungskomponente zum gewünschten Azofarbstoff umsetzt. Die Diazotierung führt man üblicherweise in mineralsaurer Lösung unter Zusatz eines Ueberschusses an Nitrit, z.B. Natriumnitrit, durch. Dieser Nitritüberschuss muss nach beendeter Diazotierung, vor der Azokupplung entfernt werden. Das geschieht beispielsweise durch Zugabe einer kleinen Menge undiazotierten Amins oder mittels Harnstoff bzw. Amidosulfonsäure (Sulfaminsäure). In der Technik wird allgemein die rasch wirkende Amidosulfonsäure verwendet, die jedoch den Nachteil hat, dass es bei einer Ueberdosierung, insbesondere im Fall des Vorliegens stark negativ substituierter Diazoniumsalze, zu Nebenreaktionen kommen kann, wie z.B. zur Reaktion der Amidosulfonsäure mit dem Diazoniumsalz, die dazu führt, dass das Amin durch Umdiazotierung zurückgebildet wird (siehe H.R. Schweizer, Künstliche Organische Farbstoffe und ihre Zwischenprodukte, Springer 1964, Seite 182). Um diese ausbeutemindernde Nebenreaktion zu vermeiden, muss die Amidosulfonsäure möglichst genau in einer Menge dosiert werden, die gerade ausreicht, um den Nitritüberschuss zu zerstören.

Insbesondere bei kontinuierlich durchgeführten Reaktionen hat sich eine Ueberwachung des Nitritgehaltes in der Diazotierungslösung durch die vielfach angewandte Tüpfelprobe auf Jodkalium-Stärkepapier als wenig geeignet erwiesen. Aufgabe der vorliegenden Erfindung war es daher, eine Methode zu entwickeln, die eine kontinuierliche Ueberwachung des Nitritgehalts und eine problemlose Steuerung der Dosierung an nitritzerstörenden Mitteln ermöglicht.

Gefunden wurde, dass sich der Nitritgehalt in Diazotierungslösungen auf einfache Weise mit Hilfe einer elektrochemischen Analysenmethode bestimmen lässt, wobei das Strom-Spannungsverhalten geeigneter Elektroden direkt als Regelgrösse zur Steuerung der Zugabe an nitritzerstörendem Mittel eingesetzt werden kann.

Gegenstand der vorliegenden Erfindung ist somit ein automatisch gesteuertes, kontinuierliches Verfahren zur Eliminierung des Nitritüberschusses in Diazotierungslösungen aromatischer Amine, das dadurch gekennzeichnet ist, dass die Zugabe des zur Entfernung der Nitritionen verwendeten Mittels durch eine elektrochemische Regelgrösse gesteuert wird.

Als elektrochemische Analysenmethoden kommen in erster Linie potentiometrische, voltammetrische oder polarographische Methoden in Betracht. Von diesen bevorzugt eingesetzt wird die potentiometrische Messmethode. Danach wird unter Verwendung von Messketten bekannter Bauart die Aenderung des Redox-Potentials der Diazotierungslösung in Abhängigkeit von der Nitritionenkonzentration verfolgt und danach die Zugabe an nitritzerstörendem Mittel geregelt.

Die genannten elektrochemischen Analysenmethoden sind an sich bekannt, vgl. z.B. Kirk-Othmer, Encyclopedia of Chemical Technology, Vol. 2 (1978), Seite 616 ff und Vol. 8 (1979), Seite 662 ff; Römpps Chemie-Lexikon, Band 2 (1981), Seite 1085 f und die dort angegebene Literatur.

Als Indikatorelektroden verwendet man beispielsweise Platin-, Silber/Silberchlorid-, Platin/Calomel- oder Gold/Calomel-Elektroden. Bewährt hat sich im vorliegenden Fall insbesondere eine Platin/Glas-Einstabmesskette.

Gearbeitet wird allgemein in einem Spannungsbereich von ca. 50 bis 700 mV, wobei zur Steuerung ein Intervall von etwa 2 bis 10 mV im Bereich maximaler Steilheit der Spannungskurve (Aequivalenzpunkt) herangezogen wird.

Sinkt die Spannung auf Werte die unterhalb dieses Intervalls liegen, wird die Zufuhr an nitritzerstörendem Mittel unterbrochen, steigt die Spannung auf Werte oberhalb dieses Bereichs, dann wird erneut nitritverbrauchendes Mittel zugeführt. Der grosse Vorteil der Messung von Redox-Potentialen ist die weitgehend verzögerungsfreie Anzeige, verbunden mit einer leichten Verwendbarkeit der Potentialschwankungen zur automatischen Regelung. Als Steuereinrichtung zur Regelung der Pumpe für das nitritzerstörende Mittel benützt man vorteilhaft einen Prozessrechner.

Zur Entfernung des Nitritüberschusses verwendet man übliche Mittel in erster Linie Amidosulfonsäure. Diese wird zweckmässigerweise in Form einer 0,5 bis 1 molaren wässrigen Lösung zugesetzt. Weiter geeignet sind Harnstoff oder auch p-Nitroanilin, wobei das Nitroanilin nur dann in Frage kommt, wenn dadurch die Nuance des Farbstoffs nicht ungünstig beeinflusst wird.

Bei der Verwendung von Amidosulfonsäure ist ausserdem von Vorteil, dass diese bei stossweiser Zugabe, mit im übrigen konstanter Dosiergeschwindigkeit, eine reinigende Wirkung auf die Elektrode hat. Diese Art der Dosierung, bei der kurzfristig ein geringer Ueberschuss an Amidosulfonsäure in der Diazotierungslösung vorliegt, lässt sich leicht mit einer sogenannten on/off feed back-Regelung durchführen. Unter konstanter Dosiergeschwindigkeit wird hier verstanden, dass pro Zeiteinheit eine konstante Menge an Amidosulfonsäurelösung zur Diazotierungslösung gegeben wird, falls die Dosierpumpe eingeschaltet ist [Schalterstellung: on], d.h. die Spannung auf Werte oberhalb des Intervalls gestiegen ist.

Neben der hier bevorzugt verwendeten potentiometrischen Messmethode kommen, wie eingangs erwähnt, als nicht stromlose Verfahren z.B. die polarographische oder auch die polarovoltrische Methode in Betracht. Durchgeführt wird beispielsweise das zuletzt genannte Verfahren mit Hilfe von zwei Platinelektroden, die durch einen konstanten Strom polarisiert sind. Ist Nitrit im Ueberschuss vorhanden, werden die Elektroden depolarisiert, was sich durch einen scharfen Spannungsabfall bemerkbar macht. Dieser Spannungsabfall wird zur Steuerung der Pumpe bzw. des Ventils benützt, wodurch der Diazotierungslösung die erforderliche Menge an nitritverbrauchendem Mittel zugeführt wird. Die Steuerung wird auch hier auf einen Punkt des scharfen Spannungsabfalls eingestellt, der in etwa dem Aequivalenzpunkt entspricht.

Bei der Durchführung des Verfahrens geht man beispielsweise so vor (siehe Abbildung), dass man die Diazokomponente ($RNH_2$) in einem Rohrreaktor R kontinuierlich mit Natriumnitrit diazotiert und die nitrithaltige Diazotierungslösung anschliessend in einen Rührkessel K leitet. Gleichzeitig erfolgt potentialgesteuert die Zufuhr von Amidosulfonsäure aus dem Vorratsbehälter B. Der Rührkessel K ist mit einer Elektrode E (Platin/Glas-Einstabmesskette) ausgestattet. Die mit Hilfe dieser Elektrode gemessenen Potentialschwankungen werden vom Prozessrechner C verarbeitet, der über ein entsprechendes Stellsignal die Pumpe P steuert, welche die wässrige Lösung der Amidosulfonsäure in den Rührkessel dosiert. Bei einer Temperatur von 10 bis 50°C, wobei je nach Stabilität des Diazoniumsalzes auch höhere Temperaturen gewählt werden können, erfolgt dann die Umsetzung der salpetrigen Säure mit der Amidosulfonsäure. Da dabei erhebliche Mengen an Stickstoff frei werden, empfiehlt es sich, in einem offenen Kessel zu arbeiten, zumal die Diazoniumsalzlösungen mehr oder weniger stark zum Schäumen neigen. Die Verweilzeit der Diazotierungslösung im Rührkessel beträgt ca. 1 bis 30 Minuten, üblicherweise 3 bis 10 Minuten. Aus dem Rührkessel wird kontinuierlich nitritfreie Diazoniumsalzlösung (RN$_2^+$) abgezogen, die anschliessend gegebenenfalls klärfiltriert und dann auf eine entsprechende
Kupplungskomponente gekuppelt wird.

Das Verfahren ist auf alle in saurem wässrigem Medium diazotierbaren
Amine anwendbar.

Insbesondere ist das erfindungsgemässe Verfahren bei der Herstellung
von Azofarbstoffen, vorzugsweise bei der kontinuierlichen Herstellung von Azofarbstoffen anwendbar. Bevorzugt wird das erfindungsgemässe Verfahren als Teil einer on-line-Steuerung eines computer-
integrierten, automatisierten Herstellungsverfahrens für Azofarbstoffe angewendet.

Als Diazokomponenten sind z.B. die folgenden geeignet:
Anilin und Derivate des Anilins, wie 4-Nitroanilin, 3-Nitroanilin,
2-Chlor-4-nitroanilin, 4-Chlor-2-nitroanilin, 2,6-Dichlor-4-nitroanilin, 4-aminoacetanilid, 2,4-Dinitroanilin, 2-Cyan-4-nitroanilin,
4-Cyananilin, 4-Chloranilin, 2,4,5-Trichloranilin, 2,5-Dimethoxyanilin, o-Anisidin, p-Anisidin, o-Phenetidin, p-Phenetidin, o-Toluidin, p-Toluidin, 4-Nitro-2-aminoanisol, 2-Nitro-4-aminoanisol,
p-Phenoxyanilin, oder auch 4-Methylsulfonylanilin, 4-Amino-2,4-di-
chlorbenzophenon, 4'-Amino-2,4-dinitrobenzophenon, 2-Nitroanilin,
2-Chlor-4,6-dinitroanilin, 2,5-Dichloranilin, 3,3'-Dichlorbenzidin,
5-Nitro-2-aminoanisol, 3-Nitro-4-aminotoluol, 2,4-Dichloranilin,
3-Nitro-4-aminoanisol, 2-Aminoanisol-4-sulfodiethylamid, 5-Chlor-
2-aminotoluol, 4-Chlor-2-aminotoluol, 4-Nitro-2-aminotoluol,
5-Nitro-2-aminotoluol, 4-Nitro-2-aminoanisol, 3,3'-Dimethoxybenzidin, 3,3'-Dimethoxy-6,6'-dichlorbenzidin, 2-Amino-4-chlorphenol,
2-Aminophenol-4-sulfamid, 2-Aminophenol-5-sulfamid, 2-Aminophenol-4-sulfomethylamid, 3-Amino-4-hydroxyphenylmethylsulfon, 2-Ami-
no-5-nitrophenylmethylsulfon, 4-Amino-3-nitrophenylmethylsulfon,
2-(N-Methyl-N-cyclohexylsulfonamido)-anilin, 2-Amino-4,2',4'-tri-
chlordiphenyläther sowie 4-Aminoazobenzol; α- oder β-Napthylamin,

sowie deren Derivate, wie z.B. 2-Naphthylamin-6,8-disulfonsäure,
1-Naphthylamin-3,6,8-trisulfonsäure, 4-Naphthylamino-5-hydroxy-
1,7-disulfonsäure oder 2-Naphthylamino-7-hydroxy-6-sulfonsäure;

Ferner heterocyclische Amine z.B. 3-Amino-1,2,4-triazol, 2-Amino-
thiazol, Benzthiazole wie 2-Aminobenzthiazol, 2-Amino-4-chlor-
benzthiazol, 2-Amino-4-cyanbenzthiazol, 2-Amino-4,6-dinitrobenzthia-
zol, 2-Amino-4-methoxy-6-nitrobenzthiazol, 2-Amino-6-methoxy-1,3-
benzothiazol oder Aminobenztriazole, die ebenfalls entsprechend
substituiert sein können.

Das folgende Beispiel dient der Erläuterung der Erfindung: Prozente
bedeuten Gewichtsprozente.

Beispiel: Ein Gemisch bestehend aus 4158,25 g 4-Aminoacetanilid
(89,0 %-ig) und 2588,25 g Anilin (100 %-ig)  wird in einem Rohrreaktor in salzsaurer Lösung kontinuierlich diazotiert. Es wird mit einem
Nitritüberschuss von 0,5 bis 10 %, bezogen auf die theoretisch
erforderliche Menge, gearbeitet. Die überschüssiges Nitrit enthaltende Diazotierungslösung wird in einen, mit einem Rührer ausgestatteten Durchlaufkessel geleitet, wo das Redox-Potential der Lösung
kontinuierlich mittels einer Platin/Argenthal(Silber-Silberchlorid)-
Einstabmesskette gemessen wird. In Abhängigkeit vom Potential wird
eine, wässrige Amidosulfonsäurelösung in den Durchlaufkessel gefördert. Das geschieht mit einer Pumpe, gesteuert durch einen Prozessrechner, der diese nach Bedarf ein- und ausschaltet. Die Zugabe der
Amidosulfonsäure erfolgt so, dass das Potential der Diazolösung
innerhalb eines 10-30 mV-Intervalls im Bereich des Aequivalenzpunktes
z.B. zwischen 590 mV und 610 mV gehalten wird. Die Reaktion zwischen
der salpetrigen Säure und der Amidosulfonsäure verläuft bei Raumtemperatur (20 bis 25°C), der adiabatische Temperaturanstieg ist ca. 1°C.
Die Verweilzeit im Durchlaufrührkessel ist nicht kleiner als 3 Minuten. Es ist vorteilhaft dafür zu sorgen, dass bei der Reaktion
freiwerdender Stickstoff den Kessel verlassen kann. Mit dieser Arbeitsweise erreicht man, dass die Diazolösung den Durchlaufkessel nitritfrei verlässt und anschliessend auf bekannte Weise zu Azofarbstoffen weiterverarbeitet werden kann.

Auch bei längerer Betriebsdauer werden an der Elektrode keinerlei Vergiftungserscheinungen festgestellt.

Verwendet man anstelle der Platin/Argenthal- Einstabmesskette eine Platin/Glas- Einstabmesskette so erzielt man gleich gute Ergebnisse.

Mit der gleichen Methode wird auch aus den Diazotierungslösungen der folgenden Amine überschüssiges Nitrit entfernt: 2-Chlor-4-nitroanilin, 4-Chlor-2-nitroanilin, 4-Aminoazobenzol und 3-Amino-1,2,4-triazol.

Wenn man wie in dem Beispiel angegeben verfährt, jedoch anstelle der potentiometrischen Messmethode die voltammetrische oder polarographische Methode anwendet, und/oder anstelle von Amidosulfonsäure Harnstoff oder 4-Nitroanilin verwendet, so kann die Nitritionenkonzentration in Diazotierungslösungen ebenfalls überwacht werden, und die Zufuhr an nitritzerstörendem Mittel gesteuert werden.

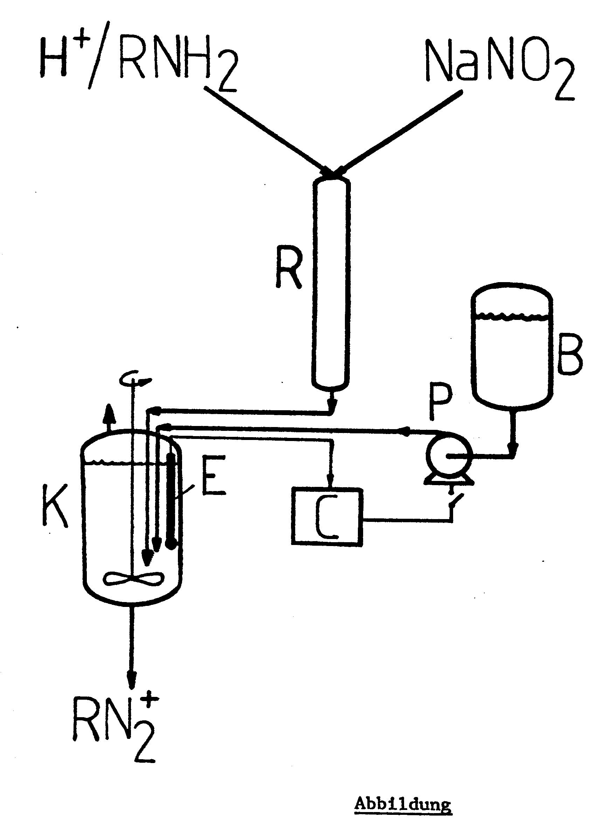

Patentansprüche

1. Automatisch gesteuertes kontinuierliches Verfahren zur Eliminierung des Nitritüberschusses in Diazotierungslösungen aromatischer
Amine, dadurch gekennzeichnet, dass die Zugabe des zur Entfernung
der Nitritionen verwendeten Mittels durch eine elektrochemische
Regelgrösse gesteuert wird.

2. Verfahren gemäss Anspruch 1, dadurch gekennzeichnet, dass es sich
bei der zur Steuerung verwendeten Regelgrösse um einen durch eine
potentiometrische, voltammetrische oder polarographische Methode
ermittelten Wert handelt.

3. Verfahren gemäss Anspruch 2, dadurch gekennzeichnet, dass die
Steuerung potentiometrisch erfolgt und das Redox-Potential der
Diazotierungslösung als Regelgrösse verwendet wird.

4. Verfahren gemäss den Ansprüchen 1 bis 3, dadurch gekennzeichnet,
dass zur Zerstörung des Nitritüberschusses Amidosulfonsäure,
Harnstoff oder 4-Nitroanilin verwendet wird.

5. Verfahren gemäss Anspruch 4, dadurch gekennzeichnet, dass man
Amidosulfonsäure verwendet.

6. Verfahren gemäss Anspruch 4, dadurch gekennzeichnet, dass die
Zugabe der Amidosulfonsäure stossweise mit konstanter
Dosiergeschwindigkeit erfolgt.

7. Anwendung des Verfahrens gemäss Anspruch 1 zur Eliminierung des
Nitritüberschusses in Diazotierungslösungen bei der Herstellung von
Azofarbstoffen, insbesondere bei der kontinuierlichen Herstellung
von Azofarbstoffen.

0209492

8. Anwendung des Verfahrens gemäss Anspruch 1 als Teil einer on-line-Steuerung eines computer-integrierten, automatisierten Herstellungsverfahren für Azofarbstoffe.

FO 7.1/JZ/sch*/sl*

**Abbildung**